# EUROPÄISCHE PATENTANMELDUNG

(11) **EP 2 336 667 A1**
(43) Veröffentlichungstag der Anmeldung: **22.06.2011**
(21) Anmeldenummer: 10015555.5
(22) Anmeldetag: 13.12.2010
(51) Int. Cl.: F24H 1/20, F24H 9/18

(54) **Speicherbehälter**

(30) Priorität: 15.12.2009 DE 102009058195
(71) Anmelder: Viessmann Werke GmbH & Co. KG, 35108 Allendorf (DE)
(72) Erfinder: Becker, André, 35108 Allendorf (DE); Wolkowski, Frank, 35066 Frankenberg (DE)
(74) Vertreter: Wolf, Michael

(57) **Zusammenfassung**

Die Erfindung betrifft einen Speicherbehälter, umfassend einen zylinderförmigen Behälter (1) zur Aufnahme eines Speichermediums und eine im Behälter (1) angeordnete, von einem Wärmeträgermedium durchströmbare Rohrwendel (2), wobei die Zylinderhauptachse (3) des Behälters (1) im Betrieb vertikal verlaufend angeordnet ist. Nach der Erfindung ist vorgesehen, dass für einen Transport des Behälters (1) bei horizontal verlaufender Zylinderhauptachse (3) zwischen der Rohrwendel (2) und einer transportauflageseitigen Zylinderwandung (4) des Behälters (1) ein Abstützelement (5) angeordnet ist.

## Beschreibung

Die Erfindung betrifft einen Speicherbehälter gemäß dem Oberbegriff des Patentanspruchs 1.

Ein Speicherbehälter der eingangs genannten Art für eine Heizungsanlage eines Gebäudes (so genannter Brauchwasserspeicher) ist nach der AT 394 630 B bekannt. Dieser besteht aus einem zylinderförmigen Behälter zur Aufnahme eines Speichermediums (Brauchwasser) und einer im Behälter angeordneten, von einem Wärmeträgermedium (Heizkreiswasser) durchströmbaren, in sich steifen Rohrwendel, wobei die Zylinderhauptachse des Behälters im Betrieb vertikal verlaufend angeordnet ist. Bei dieser Konstruktion durchgreifen die beiden Anschlussstutzen der Rohrwendel jeweils an einer (gedachten) Schnittstelle der Zylinderhauptachse mit dem Behälter die Zylinderwandung. Würde man diesen Speicherbehälter zum Transport auf die Seite legen (die Zylinderhauptachse würde dann horizontal verlaufen), ergäbe sich an den Anschlussstutzen der Rohrwendel eine vergleichsweise gleichmäßige Belastung.

Da sich bei dieser Konstruktion aufgrund der oben und unten herausragenden Anschlussstutzen allerdings eine relativ große Gesamtbauhöhe ergibt, ist man anmelderseitig in der Praxis dazu übergegangen, die Anschlussstutzen seitlich durch die Behälter- bzw. Zylinderwandung zu führen, wobei sich bedingt durch die Verwendung eines quaderförmigen Gehäuses für den zylinderförmigen Behälter in diesem Zusammenhang - wiederum mit Blick auf die Gesamtbaugröße - die Maßgabe ergibt, dass die Anschlussstutzen nicht senkrecht, sondern vorzugsweise mit 45° zur jeweiligen Senkrechten der Gehäusewandung durch die Zylinderwandung geführt sind.

Der Erfindung liegt die Aufgabe zugrunde, einen Speicherbehälter der eingangs genannten Art zu verbessern, und zwar insbesondere unter dem Aspekt, dass auch bei seitlicher bzw. schräger (und zur Gehäusewandung nicht senkrechter) Wandungsdurchgreifung der Anschlussstutzen eine unnötig hohe Belastung (Drehmoment) der entsprechenden Schweißstellen beim Transport des Speicherbehälters vermieden wird.

Diese Aufgabe ist mit einem Speicherbehälter der eingangs genannten Art durch die im Kennzeichen des Patentanspruchs 1 aufgeführten Merkmale gelöst.

Nach der Erfindung ist also vorgesehen, dass für einen Transport des Behälters bei horizontal verlaufender Zylinderhauptachse zwischen der in sich steifen Rohrwendel und einer transportauflageseitigen Zylinderwandung des Behälters ein Abstützelement angeordnet ist.

Mit anderen Worten ist erfindungsgemäß eine auch im Betrieb im Behälter verbleibende Transportsicherung für die Rohrwendel vorgesehen. Diese ist, wie ausgeführt, so ausgebildet, dass sie durch das Eigengewicht der Rohrwendel beim Transport hervorgerufene Kräfte aufnehmen und in die Zylinderwandung weiterleiten kann. Auf diese Weise werden Schweißstellen zwischen der Rohrwendel und der Zylinderwandung weniger belastet, was die Lebensdauer des Speicherbehälters günstig beeinflusst, wobei die erfindungsgemäße Lösung insbesondere bei Speicherbehältern mit nicht vertikal, sondern schräg durch die Zylinderwandung hindurchgeführten Anschlussstutzen von Vorteil ist.

Andere vorteilhafte Weiterbildungen des erfindungsgemäßen Speicherbehälters ergeben sich aus den abhängigen Patentansprüchen.

Der Vollständigkeit halber wird noch auf die DE 20 2005 013 700 U1 hingewiesen. Dort ist ebenfalls ein Speicherbehälter offenbart, bei dem allerdings ein flexibles Wellrohr verwendet wird, das dementsprechend nicht in sich steif ausgebildet und bei dem die eingangs beschriebene Problematik per se nicht gegeben ist.

Der erfindungsgemäße Speicherbehälter einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: perspektivisch und zum Teil aufgeschnitten den er- findungsgemäßen Speicherbehälter mit Abstützele- ment;
- Figur 2: der Speicherbehälter gemäß Figur 1 perspektivisch und von der anderen Seite aufgeschnitten;
- Figur 3: im Schnitt und in Achsrichtung gemäß Figur 2 der erfindungsgemäße Speicherbehälter;
- Figur 4: perspektivisch das Abstützelement gemäß Figur 1 bis 3 in vergrößerter Darstellung;
- Figur 5: in Seitenansicht das Abstützelement gemäß Figur 4 und
- Figur 6: perspektivisch das Abstützelement gemäß Figur 4 und 5 von seiner Rückseite (zylinderwandungsseitig) mit Aufschubklammer.

Der Speicherbehälter, von dem hier ausgegangen ist, besteht aus einem zylinderförmigen Behälter 1 zur Aufnahme eines Speichermediums (Brauchwasser) und einer im Behälter 1 angeordneten, von einem Wärmeträgermedium (Heizkreiswasser) durchströmbaren, in sich steifen und eine glatte Oberfläche aufweisenden Rohrwendel 2, die aus mindestens einem durch Biegen (plastisch) verformten Rohrstück hergestellt ist, wobei die Zylinderhauptachse 3 des Behälters 1 im Betrieb typischer Weise vertikal verlaufend angeordnet ist.

Insbsondere mit Rücksicht auf eine horizontale Orientierung bzw. Lagerung des Behälters beim Transport ist nun für einen solchen Speicherbehälter wesentlich, dass für einen solchen Transport des Behälters 1, also bei dann horizontal orientierter Zylinderhauptachse 3, zwischen der Rohrwendel 2 und einer transportauflageseitigen Zylinderwandung 4 des Behälters 1 ein Abstützelement 5 angeordnet ist.

Das Abstützelement 5 ist dabei mindestens mit einem Wendelgang, vorzugsweise mit mehreren Wendelgängen der Rohrwendel 2 in Verbindung stehend ausgebildet.

Ferner ist das Abstützelement 5 rohrwendelseitig vorteilhaft mit sich parallel zur Zylinderhauptachse 3 erstreckenden, linienförmigen Rohrwendelanlagekanten 6 versehen, so dass sich nur punktuelle Verbindungskontakte zwischen dem Abstützelement 5 und den Rohrwendelgängen ergeben.

Außerdem ist das Abstützelement 5, das bevorzugt aus einem geeigneten Kunststoff gebildet ist, rohrwendelseitig sattelförmig ausgebildet und damit an die Krümmung der Rohrwendel angepasst und geht vorzugsweise an seinen Rändern in zwei sattelseitenteilartige, sich gegen die Zylinderwandung 4 abstützende Teile 7 über.

Um irgendwelche Querströmungsbehinderungen durch das Abstützelement 5 zu vermeiden bzw. zu reduzieren, ist das Abstützelement 5, wie aus den Darstellungen ersichtlich, mit einer Vielzahl von Durchbrechungen 8 versehen.

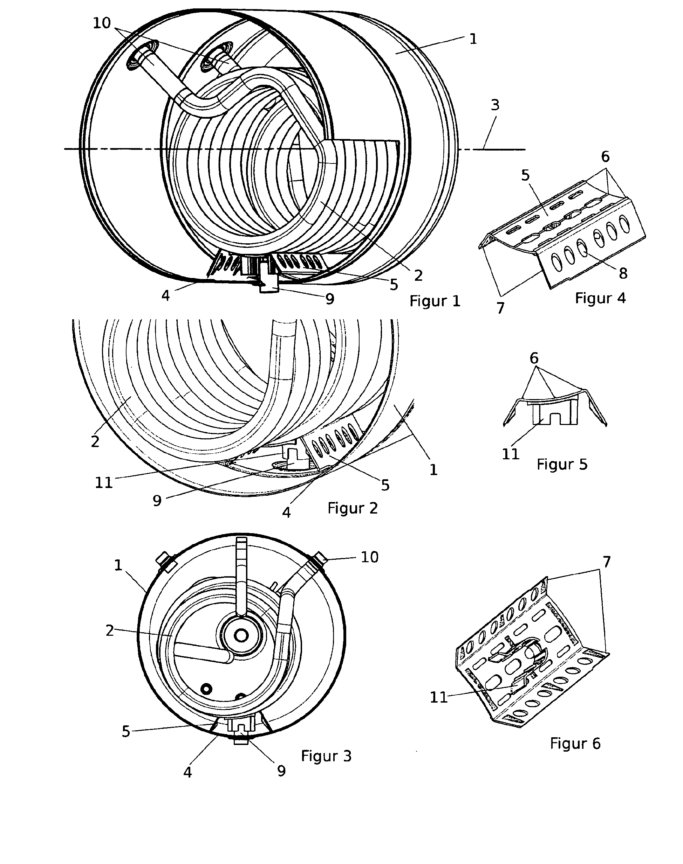

Um ferner dem Abstützelement 5 in seiner Positionierung zwischen Zylinderwandung 4 und Rohrwendel 2 einen Halt und eine sachgerechte Lage zu vermitteln, ist an der Zylinderwandung 4 innen ein Aufnahmeelement 9 vorzugsweise in Form eines kleinen angeschweißten (metallischen) Rohrstutzens für das Abstützelement 5 vorgesehen, wobei das Abstützelement 5 vorzugsweise formschlüssig mit dem Aufnahmeelement 9 verbunden ist. Für diese formschlüssige Verbindung ist am Abstützelement 5, und zwar zur Behälterwandseite hin (siehe Figur 6), eine Aufschubklammer 11 am Abstützelement 5 vorgesehen, die mit einer gewissen Spannung auf das Aufnahmeelement 9 aufsteckbar und derart dem Rohrstutzen zugeordnet ist, dass sie bei vertikal installiertem Behälter 1 mit ihrer offenen Seite nach unten weist.

Die vorzugsweise schraubenlinienförmig gewendelte Rohrwendel 2 weist im übrigen beim Ganzen mindestens einen Anschlussstutzen 10 auf, der durch die Zylinderwandung 4 hindurchgeführt und mit dieser vorzugsweise verschweißt ausgebildet ist. Ein zweiter Anschlussstutzen 10 könnte zwar den einen oder anderen Endabschluss des Behälters 1 durchgreifen, in der Regel wird aber auch der zweite Anschlussstutzen 10, wie in Figur 1 dargestellt, zweckmäßig ebenfalls durch die Zylinderwandung 4 geführt. Die vorerwähnten beiden Endabschlüsse des Behälters 1 sind übrigens als Klöpperböden ausgebildet, wobei der wendelnahe Boden nach Einbringung des Abstützelements 5 angesetzt wird.

### Bezugszeichenliste

- 1: Behälter
- 2: Rohrwendel
- 3: Zylinderhauptachse
- 4: Zylinderwandung
- 5: Abstützelement
- 6: Rohrwendelanlagekante
- 7: Teil
- 8: Durchbrechung
- 9: Aufnahmeelement
- 10: Anschlussstutzen
- 11: Aufschubklammer

## Patentansprüche

1. Speicherbehälter, umfassend einen zylinderförmigen Behälter (1) zur Aufnahme eines Speichermediums und eine im Behälter (1) angeordnete, von einem Wärmeträgermedium durchströmbare Rohrwendel (2),
**dadurch gekennzeichnet,**
**dass** für einen Transport des Behälters (1) bei horizontal verlaufender Zylinderhauptachse (3) zwischen der Rohrwendel (2) und einer transportauflageseitigen Zylinderwandung (4) des Behälters (1) ein Abstützelement (5) angeordnet ist.

2. Speicherbehälter nach Anspruch 1,
**dadurch gekennzeichnet,**
**dass** das Abstützelement (5) mindestens mit einem Wendelgang, vorzugsweise mit mehreren Wendelgängen der Rohrwendel (2) in Verbindung stehend ausgebildet ist.

3. Speicherbehälter nach Anspruch 1 oder 2,
**dadurch gekennzeichnet,**
**dass** das Abstützelement (5) rohrwendelseitig mit parallel zur Zylinderhauptachse (3) verlaufenden, linienförmigen Rohrwendelanlagekanten (6) versehen ist.

4. Speicherbehälter nach einem der Ansprüche 1 bis 3,
**dadurch gekennzeichnet,**
**dass** das Abstützelement (5) rohrwendelseitig sattelförmig ausgebildet ist und vorzugsweise zwei sattelblattartige, sich gegen die Zylinderwandung (4) abstützende Teile (7) aufweist.

5. Speicherbehälter nach einem der Ansprüche 1 bis 4,
**dadurch gekennzeichnet,**
**dass** das Abstützelement (5) aus Kunststoff gebildet ist.

6. Speicherbehälter einem der Ansprüche 1 bis 5,
**dadurch gekennzeichnet,**
**dass** das Abstützelement (5) mit einer Vielzahl von Durchbrechungen (8) versehen ist.

7. Speicherbehälter nach einem der Ansprüche 1 bis 6,
**dadurch gekennzeichnet,**
**dass** an der Zylinderwandung (4) ein Aufnahmeelement (9) für das Abstützelement (5) vorgesehen ist, wobei das Abstützelement (5) vorzugsweise formschlüssig mit dem Aufnahmeelement (9) verbunden ist.

8. Speicherbehälter nach Anspruch 7,
**dadurch gekennzeichnet,**
**dass** das Aufnahmeelement (9) als Rohrstück ausgebildet und an der Zylinderwandung (4) vorzugsweise durch Schweißen befestigt ist.

9. Speicherbehälter nach einem der Ansprüche 1 bis 8,
**dadurch gekennzeichnet,**
**dass** die vorzugsweise schraubenlinienförmig gewendelte Rohrwendel (2) mindestens einen Anschlussstutzen (10) aufweist.

10. Speicherbehälter nach Anspruch 9,
**dadurch gekennzeichnet,**
**dass** der Anschlussstutzen (10) durch die Zylinderwandung (4) hindurchgeführt ausgebildet ist und dieser und die Zylinderwandung (4) vorzugsweise miteinander verschweißt ausgebildet sind.
